# EUROPEAN PATENT APPLICATION

(11) **EP 3 838 907 A1**
(43) Date of publication of application: **23.06.2021**
(21) Application number: 19218814.2
(22) Date of filing: 20.12.2019
(51) Int. Cl.: C07F 9/6571, C08G 63/692, C08L 67/02, C08L 77/00

(54) **REACTIVE PHOSPOROUS CONTANING FLAME RETARDANT AND INTRINSICALLY FLAME RETRADANT POLYMER OBTAINABLE BY POLYCONDENSATION WITH IT**

(71) Applicant: POLYTECHNYL S.A.S., 75009 Paris (FR)
(72) Inventor: BADEL, Thierry, 69008 Lyon (FR); JOANNES, Delphine, 69360 Sérézin-du-Rhône (FR); CHOUZIER, Sandra, 30360 Deaux (FR)
(74) Representative: Chatelan, Florence Anne

(57) **Abstract**

The invention relates to a phosphorous containing monomer and a process thereof. Furthermore, the invention relates to a phosphorous containing polymer comprising said monomer and a production process thereof. The phosphorous containing polymer of the invention is useful as flame-retardant polymer. Additionally, the invention relates to a thermoplastic polymer composition comprising said phosphorous containing polymer and optionally a further thermoplastic polymer. The thermoplastic polymer composition can be used for the production of molded articles or yarns having excellent flame-retardant properties in order to ensure adequate fire protection.

## Description

### TECHNICAL FIELD OF THE INVENTION

The invention relates to a phosphorous containing monomer and a process thereof. Furthermore, the invention relates to a phosphorous containing polymer comprising said monomer and a production process thereof. The phosphorous containing polymer of the invention is useful as flame-retardant polymer. Additionally, the invention relates to a thermoplastic polymer composition comprising said phosphorous containing polymer and optionally a further thermoplastic polymer. The thermoplastic polymer composition can be used for the production of molded articles or yarns having excellent flame-retardant properties in order to ensure adequate fire protection.

### BACKGROUND

Flame-retardant polymer compositions are useful for the production of molded articles in a large number of application fields because of their excellent property profile. In many applications, it is important that the polymer composition has excellent flame-retardant properties in order to ensure adequate fire protection. In addition, it is, however, also important that the further physical properties, such as e.g. tensile modus, tear strength and breaking elongation, fulfill the prescribed requirements for the respective application cases.

Therefore, flame retardants are usually added to polymeric materials to enhance the flame-retardant properties of the polymers. This approach provides high flexibility with regard to the polymeric materials although there are also limitations with respect to the required compatibility of the used flame retardant with the polymeric materials.

The flame retardants are subdivided in non-reactive and reactive flame retardants.

For the production of thermoplastic polymer compositions finished to be flame-retarding, a large number of non-reactive flame-retardants has already been in technical use for a long time. However, these are based in most cases on halogen- or antimony-containing substances which recently have come under public criticism due to their negative eco- and genotoxicologic potential. For this reason, halogen- and antimony-free non-reactive flame retardants are increasingly used, such as, e.g., red phosphor, melamine polyphosphate, melamine cyanurate or aluminum phosphinates, as are described in EP 1 070 454 A.

However, the aforementioned flame retardants are only partly suitable for use in melt spinning processes employed for the production of polyamide or polyester fibers. The halogenated flame retardants can considerably damage the spinning nozzle under the temperature and pressure conditions used during spinning. In contrast thereto, melamine polyphosphate, melamine cyanurate or aluminum phosphinates are only insufficiently soluble in polyamides or polyesters, which results in an inhomogeneous distribution of the flame retardant in the base polymer. This leads to considerable drawbacks in particular in the melt-spinning process, since a clogging of the spinning nozzle is caused.

Another approach to provide a flame-retardant thermoplastic polymer composition is to use 9,10-dihydro-9-oxa-10-phosphaphenanthrene-10-oxide (DOPO) based phosphorous flame-retardant polymers in said composition. The 9,10-dihydro-9-oxa-10-phosphaphenanthrene-10-oxide (DOPO) based phosphorous flame-retardant polymers are characterized in that certain monomers, in particular diacid monomers, are incorporated within the polymer backbone. DOPO based flame-retardant polymers and production methods thereof are for example described in WO 2015/007783, CN 104231262 or CN 104211954. It is said that these halogen-free flame retardants are not toxic and can be processed easily together with thermoplastic molding compositions at high temperatures in a melt-spinning process or other extrusion processes.

However, the present inventors found that the copolymerization of polyamides and the flame retardant monomers as known in the art can adversely impact on the physical properties of the final polymer, such as melt viscosity. The existing phosphorous containing flame retardant monomers based on DOPO are not able to bring high enough polyamide viscosity, which is necessary to carried out the spinning process in a satisfactory manner.

Furthermore, it is known that phosphorous-containing unsaturated polyesters comprising monomers derived from DOPO derivatives as described in the prior art, for example in WO 2013/139877 A1, are hardly suitable in melt-spinning or other extrusion processes together with a thermoplastic base polymer because the unsaturated carboxylic acid monomers in these unsaturated polyesters are unstable at higher temperatures.

Hence, there is still a need for flame-retardant monomers and polymers thereof with improved properties that can be used in different polymer substrates. It is particularly desirable to provide flame-retardant polymers exhibiting a high chemical stability and, if needed, a good solubility in thermoplastic base polymers which allows productions of, for example, fibers, molded articles or films from a composition comprising the flame-retardant polymer and optionally the thermoplastic base polymer at high temperatures, such as by melt spinning or other extrusion processes. Furthermore, it is desirable that the flame-retardant polymer can be distributed homogenously in the base polymer by a simple physical mixing under conditions, which are usual in a melt-spinning, extrusion or injection-molding process. The flame-retardant polymer should have low tendency to migrate out of the base polymer and, thus, produce a permanent flame-retarding effect.

Furthermore, there is still a need for flame-retardant polymers, which exhibit improved flame-retardant properties compared to known flame retardants. An increased flame-retardant effectivity would allow to either produce an article having improved flame-retardancy using the same amount of flame-retardant polymer or to produce an article having the same flame-retardancy as prior art articles but requiring the incorporation of only less flame-retardant polymer. Reducing the required amount of flame-retardant polymer, minimizes the influence on the physical properties of the base polymer. This ensures reliable processing during extrusion, injection-molding or melt-spinning processes and the following process steps, such as stretching, texturing and dying.

### SUMMARY

The present inventors now found that one or more of the above objects can be achieved by providing a phosphorous containing monomer, which is an adduct of
a. 9,10-dihydro-9-oxa-10-phosphaphenanthrene-10-oxide (DOPO) and/or a nuclear substituted DOPO derivative with
b. at least one unsaturated divalent carboxylic acid, ester or anhydride thereof, as defined in formula (I) or (II) 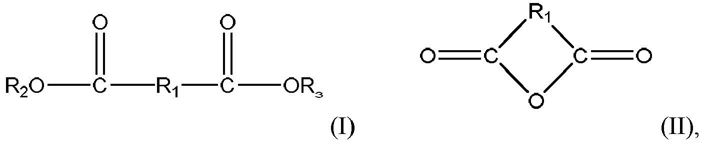 wherein
   R₁ is a linear chain containing at least 4 carbon atoms and at least one double bond, and
   R₂ and R₃ are independently hydrogen, an alkyl group or an aryl group.

The phosphorous containing monomer of the invention differs from the phosphorous containing monomers known in the prior art in that the phosphor atom of DOPO and it derivatives is directly bounded to a carbon atom of the linear chain (R1) of the divalent carboxylic acid, ester or anhydride thereof, as defined in formula (I) or (II). Additionally, according to the invention, said linear chain contains at least 4 carbon atoms.

The inventors surprisingly found that the phosphorous containing monomer of the invention can be easily inserted within a polymer backbone, whereby no branching of the polymer backbone occurs. The obtained phosphorous containing polymer shows an improved viscosity and good flame-retardant properties.

Another aspect of the invention relates to a production method of said monomer, wherein in a first process step the unsaturated divalent carboxylic acid, ester or anhydride thereof is produced by catalytic dimerization of a carboxylic acid or ester according to formula (III) or (IIIa) or a mixture thereof 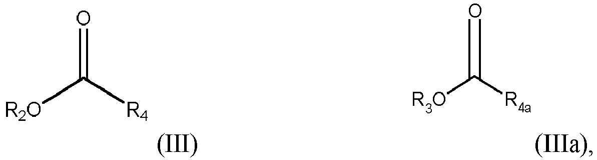 wherein,
R₄ and R₄ₐ are independently a linear chain containing at least 2 carbon atoms and at least one double bond and R₂ and R₃ are independently hydrogen, an alkyl group or an aryl group,
and in a further process step 9,10-dihydro-9-oxa-10-phosphaphenanthrene-10-oxide (DOPO) and/or nuclear substituted DOPO derivative is added to the obtained unsaturated divalent carboxylic acid, ester or anhydride thereof.

Furthermore, the present invention relates to phosphorous containing polymer and production process thereof, which is useful as flame retardant polymer and obtainable by polycondensation of at least one phosphorous containing monomer according to the invention, at least one diamine, diol, aminoacid, lactam, hydroxycarboxylic acid or lactone and optionally another monomer.

Finally, another aspect of the present invention relates to a thermoplastic polymer composition comprising at least one of the above flame-retardant polymer and optionally a further thermoplastic polymer.

### DETAILED DESCRIPTION

In the present description, wherein an element or composition is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components.

Further, it should be understood that elements and/or features of an apparatus, a process or method described herein can be combined in a variety of ways without departing from the scope and disclosures of the present teachings, whether explicit or implicit herein.

The term "thermoplastic polymer" shall mean a polymer that becomes pliable or moldable above a specific temperature, so is capable of flow at high temperatures below the thermal decomposition temperature and returns to a solid state upon cooling. A polymer is a macromolecular compound prepared by reacting (i.e., polymerizing, condensation) monomers of the same or different type, including homo- and copolymers. Thermoplastic materials are made by chain polymerization, polyaddition and / or polycondensation.

The term "comprising" includes "consisting essentially of" and "consisting of".

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

In the present specification, the description of several successive ranges of values for the same variable also comprises the description of embodiments where the variable is chosen in any other intermediate range included in the successive ranges. Thus, for example, when it is indicated that "the magnitude X is generally at least 10, advantageously at least 15", the present description also describes the embodiment where: "the magnitude X is at least 11", or also the embodiment where: "the magnitude X is at least 13.74", etc.; 11 or 13.74 being values included between 10 and 15.

In the present specification, the choice of an element from a group of elements also explicitly describes:
- the choice of two or the choice of several elements from the group,
- the choice of an element from a subgroup of elements consisting of the group of elements from which one or more elements have been removed.

A plurality of elements includes two or more elements.

The phrase 'A and/or B' refers to the following selections: element A; or element B; or combination of elements A and B (A+B). The phrase 'A and/or B' is equivalent to at least one of A and B. The phrase 'A and/or B' equates to at least one of A and B.

The phrase 'A1, A2, ... and/or An' with n ≥ 3 includes the following choices: any single element Ai (i= 1, 2, ...n); or any sub-combinations of from two to (n-1) elements chosen from A1, A2, ..., An; or combination of all elements Ai (i=1, 2, ... n). For example, the phrase 'A1, A2, and/or A3' refers to the following choices: A1; A2; A3; A1+A2; A1+A3; A2+A3; or A1+A2+A3.

The use of the singular 'a' or 'one' herein includes the plural unless specifically stated otherwise. By way of example, "a multivalent alcohol" denotes one multivalent alcohol or more than one multivalent alcohol.

In addition, if the term "about" or "ca." is used before a quantitative value, the present teachings also include the specific quantitative value itself, unless specifically stated otherwise. As used herein, the term "about" or "ca." refers to a +-10% variation from the nominal value unless specifically stated otherwise.

One aspect of the present invention relates to a phosphorous containing monomer, which is an adduct of
a. 9,10-dihydro-9-oxa-10-phosphaphenanthrene-10-oxide (DOPO) and/or a nuclear substituted DOPO derivative with
b. at least one unsaturated divalent carboxylic acid, ester or anhydride thereof, as defined in formula (I) or (II) 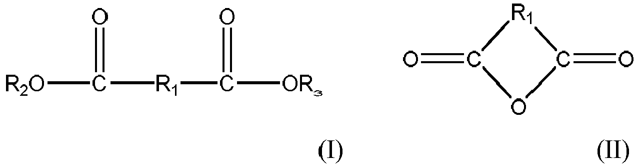 wherein,
   R₁ is a linear chain containing at least 4 carbon atoms and least one double bond
   R₂ and R₃ are independently hydrogen, an alkyl group or an aryl group.

DOPO has the following chemical structure:

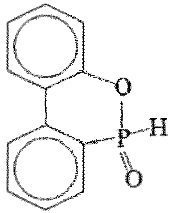

"Nuclear substituted DOPO derivatives" denotes DOPO derivatives which are for example described in WO 2019/081226 and bear one or more substituents on the aromatic rings of DOPO. Each ring may bear 0 to 4 substituents, which can for example be selected from alkyl, alkoxy, aryl, aryloxy and aralkyl. The alkyl moiety in alkyl, alkoxy and aralkyl may have, for example, 1 to 30 carbon atoms, which may be linear, branched or cyclic and which may be saturated or unsaturated, preferably saturated. The aryl in aryl, aryloxy and arylalkyl may, for example, comprise 6 to 30 carbon atoms, such as phenyl and naphthyl. If the DOPO molecule bears more than one nuclear substituent, these substituents may be identical or different to each other.

According to the invention, the linear chain (Ri) of the unsaturated divalent carboxylic acid, ester or anhydride thereof, as defined in formula (I) or (II), contains at least 4 carbon atoms, preferably 4 to 10 carbon atoms, more preferably 4 to 8 carbon atoms, most preferably 4 carbon atoms.

Additionally, the linear chain (Ri) contains at least one double bound, preferably at least 2 or at least three double bounds. In a preferred embodiment of the invention the linear chain (R₁) contains one double bound.

In a further preferred embodiment of the invention, the linear chain R₁ of formula (I) or (II) is 1-butylene or 2-butylene.

Furthermore, the substituents R₂ and R₃ of the unsaturated divalent carboxylic acid, ester or anhydride thereof, as defined in formula (I) or (II), are hydrogen, alkyl or aryl groups. In one embodiment, it is preferred that the R₂ and R₃ are independently selected from linear, branched and/or cyclic C₁₋₆ alkyl residues or C₆₋₁₈ aryl residues, for example methyl, ethyl, propyl, isopropyl, butyl, tert.-butyl, cyclohexyl, phenyl or naphthyl. More preferred R₂ and R₃ are independently selected from hydrogen, ethyl or methyl.

In a most preferred embodiment of the invention, the phosphorous containing monomer has the following formula (IV) 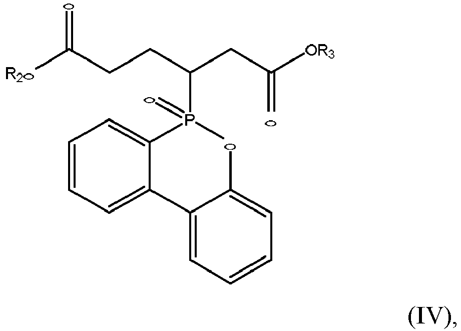 wherein R₂ and R₃ are preferably hydrogen, ethyl or methyl.

According to the invention, the phosphorous containing monomer as described above is produced such that in a first process step the unsaturated divalent carboxylic acid, ester or anhydride thereof, as defined in formula (I) or (II), is produced by catalytic dimerization of a carboxylic acid or ester according to formula (III) or (IIIa) or a mixture thereof 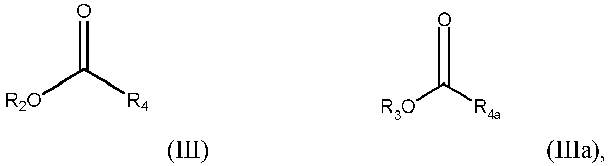 wherein
R₄ and R₄ₐ are independently a linear chain containing at least 2 carbon atoms and at least one double bond and R₂ and R₃ are independently hydrogen, an alkyl group or an aryl group as defined above.

Furthermore, it is preferred that R₄ and R₄ₐ are independently a linear chain containing 2 to 5, more preferably 2 to 4 carbon.

Additionally, the linear chains R₄ and R₄ₐ contain at least one double bound, preferably independently from each other at least two, at least three double bounds. In a preferred embodiment R₄ and/or R₄ₐ contain one double bound.

In a further preferred embodiment, R₄ and R₄ₐ are identical. In a most preferred embodiment, R₄ and/or R₄ₐ are ethylene.

According to the invention, the catalytic dimerization is carried out under common dimerization reaction conditions, wherein the catalyst preferably is selected from the group consisting of alkyl phosphinite, aryl phosphinite, alkyl phosphinate, aryl phosphinate, metallic catalysts, which are selected from the group consisting of Ni, Pd, Ru, Rh, and mixtures thereof. Suitable metal catalysts are for example described in US 4,638,084 or US 4,889,949.

Furthermore, it is preferred that the catalytic dimerization reaction is carried out at a temperature between 80 and 200 °C, more preferably between 100 and 150 °C for a period of 2 to 6 hours , more preferably of 3 to 5 hours.

In order to obtain the phosphorous containing monomer of the invention, in a further process step the produced unsaturated divalent carboxylic acid, ester or anhydride thereof reacts further with 9,10-dihydro-9-oxa-10-phosphaphenanthrene-10-oxide (DOPO) and/or nuclear substituted DOPO derivative as defined above.

The DOPO and/or nuclear substituted DOPO derivative may directly added to (mixed with) the unsaturated divalent carboxylic acid, ester or anhydride thereof obtained in the first process step or after isolation and purification of the unsaturated divalent carboxylic acid, ester or anhydride thereof. According to the invention, common isolation and purification methods as known in the art are suitable.

It is preferred that the formation of the adduct of DOPO and/or nuclear substituted DOPO with the unsaturated divalent carboxylic acid, ester or anhydride thereof as described above, i.e. the formation of the phosphorous containing monomer of the invention, is carried out at a temperature between 80 to 120 °C, more preferably between 90 and 110 °C, for a period of 40 to 70 hours, more preferably for a period of 45 to 60 hours.

The obtained adduct according to the invention can be easily purified by using method as known the art.

The purity of the phosphorous containing monomer of the invention is preferably at least 95 % or more, more preferably at least 98 % or more. The product yield is preferably between 70 and 90 %, preferably between 75 and 85%.

In case the phosphorous containing monomer of the invention is an ester, the corresponding acid may obtained by saponification and/or hydrolysis of the ester under common reaction conditions.

The phosphorous containing monomer of the invention may be used to produce a phosphorous containing polymer having good flame-retardant properties, i.e. to produce flame retardant thermoplastic polymers.

According to the invention, the phosphorous containing polymer is obtainable by polycondensation of
a. at least one phosphorous containing monomer according to the invention,
b. at least one monomer selected from the group consisting of diamine, diol, aminoacid, lactam, hydroxycarboxylic acid, lactone and mixtures thereof, and
c. optionally other monomers.

The phosphorous containing polymer of the invention may be a homo- or a copolymer. The phosphorous containing homopolymer of the invention comprises the phosphorous containing monomer of the invention and identical diamine, diol, aminoacid, lactam, hydroxycarboxylic acid or lactone monomers as defined below. The phosphorous containing copolymer of the invention comprises the phosphorous containing monomer of the invention and different diamine diol, aminoacid, lactam, hydroxycarboxylic acid and/or lactone monomers, and optionally other monomers, as defined below.

In a further preferred embodiment, the phosphorous containing polymer is halogen-free.

Additionally, it is preferred that the phosphorous containing polymer of the invention has a phosphorous content of at least 0.1 % by weight. Throughout this description, the phosphorous content is given in % by weight based on the total weight of the polymer. In more preferred embodiments, the polymer has a phosphorous content of at least 0.5 % by weight, more preferably at least 0.9 % by weight. The upper limit of the phosphorous content in the polymer of the invention is not particularly limited. Generally, the phosphorous content should not be above 15 % by weight, preferably at a maximum of 10 % by weight, more preferably at a maximum of 9% by weight and even more preferably at a maximum of 8 % by weight. The given lower and upper limits of the phosphorous content can be combined with each other. Suitable ranges are, for example, at least 0.1 % to about 15 % by weight and about 0.5 % to about 9 % by weight. Other combinations of lower and upper limits are possible as well. In preferred embodiments, the phosphorous content is about 0.5 % to about 15 % by weight, more preferably about 0.9 % to about 10 % by weight, even more preferably about 0.9 % to about 8.5 % by weight, most preferably about 0.5 to about 5 % by weight, each of the total weight of the polymer.

In order to facilitate a high thermal stability of the final phosphorous containing polymer, it is preferred that the phosphorous-containing monomer of the invention does not contain any carbon carbon double bonds except aromatic bonds.

As described above, the phosphorous containing polymer of the invention may be obtained by polycondensation of the phosphorous containing monomer of the invention with at least one monomer selected from the group consisting of diamine, diol, amino acid, lactam, hydroxycarboxylic acid, lactone or mixture thereof as further specified below.

The diamine used in the invention may contain primary, secondary or secondary and one or more tertiary amine groups.

Preferably, the diamine is an alkane diamine of 4 to 12 carbon atoms or a solution of a salt of an alkanedicarboxylic acid of 4 to 12 carbon atoms and an alkane diamine of 4 to 12 carbon atoms or mixtures thereof.

The alkane diamine used in the present invention may be a linear, branched, cycloalkane, heterocycloalkane diamine or phenylalkyldiamine. Examples for phenylalkyl diamines are m-xylylenediamine or p-xylylenediamine. It is even more preferred that the diamine is selected from the group consisting of 1,6-hexanediamine, 1,8-octadiamine, 1,10-decanediamine, 1,12-docdecanediamine, hexamethylenediamine (HMD), heptamethylene diamine, tetramethylene diamine, octamethylene diamine, nonamethylene diamine, decamethylene diamine, 2-methylpenta-methylene diamine, undecamethylene diamine, dodecamethylene diamine, isophorone diamine, 1,4-diaminobutane, 1,5-diaminopentane, 1,9-diaminononane, 4,4-diaminodicyclohexylmethane (PACM), or mixtures thereof. In a most preferred embodiment of the invention, the diamine is HMD.

The alkanedicarboxylic acid used in the present invention may be a linear, branched, cycloalkane or heterocycloalkane dicarboxylic acid. More preferably, the alkanedicarboxylic acid is selected from the group consisting of adipic acid, suberic acid, sebacic acid, dodecanedioic acid, isophthalic acid, terephthalic acid, azelaic acid, pimelic acid, naphthalene dicarboxylic acid or mixtures thereof. According to the invention, adipic acid is the preferred and most used monomer.

Suitable secondary diamines, which may contain also one of more tertiary amine groups, are described for example in WO 2019/081226 A1.

Preferably, the diol used in the present invention is selected from the group consisting of alkane diols, glycols, phosphine oxides or mixtures thereof. The alkane diol may be a linear, branched, cycloalkane or heterocycloalkane. In a preferred embodiment, the alkane diols contains 2 to 30 carbon atoms, preferably 2 to 20 carbon atoms, more preferably 2 to 15 carbon atoms, even more preferred 2 to 12 carbon atoms. Examples for suitable diols according to the invention are 1,2-propandiol, 1,3-propandiol, 1,3-butandiol, 1,4-butandiol, 2,3-butandiol, ethylene glycol, diethylene glycol, propylene glycol, dipropylene glycol, neopentylglycol, diethyl glycol, isosorbide, cyclohexanedimethanol, tricyclodecan-dimethanol, bispropoxylate Bisphenol A, hydrogenated bisphenol A phosphine oxides as described in WO2018/197173 A1 or mixtures thereof.

Suitable aminoacids and lactams according to the invention are for example amino-caproic acid, epsilon-caprolactam, 12-aminododecanoic acid, laurolactam, 11-aminoundecanoic acid or 10-aminodecanoic acid. In a most preferred embodiment of the invention, the lactam is epsilon-caprolactam.

Suitable hydroxycarboxylic acids and lactone according to the invention are for example lactic acid, glycolic acid, caprolactone and malic acid.

The above described phosphorous containing polymer may optionally comprise other monomers in addition to the first phosphorous-containing monomer of the invention. These other monomers are not particularly limited as long as they can react with the phosphorous containing monomer of the invention or the diamine, diol, lactam, aminoacid, hydroxycarboxylic acid or lactone as described above to form the polymer. Preferably, the other monomer does not contain any carbon carbon double or triple bond except aromatic bonds in order to obtain a final flame-retardant polymer of high thermal stability.

The "other monomers" can be selected or example from di- and multivalent carboxylic acids and di- or multivalent amines, which may or may not comprise phosphorous atoms or other heteroatoms, such as oxygen, nitrogen and sulfur. Other monomers, which can for example form block copolymers with the polyamide units of monomer of the invention and the diamine, may be used.

If present, "other monomers" c) can, for example, be selected from carboxyphosphinic acid derivatives, such as carboxyethyl-phenylphosphinic acid (CEPPA) and carboxyethyl-methylphosphinic acid (CEMPA), aminophosphinic acid derivatives making an amide bond by polycondensation, such as aminomethyl phosphinic acid (AMPA), biscarboxyphosphine oxide derivatives, such as bis(beta-carboxyethyl)methylphosphine oxide (CEMPO), bisaminophosphine oxide derivatives making an amide bond by polycondensation, such as bis(3-aminopropyl)methylphosphine oxide (AMPO), aliphatic diols, such as monoethylene glycol, diethylene glycol, propylene glycol, 1,3-propanediol, 1,3-butandiol, 1,4-butandiol, neopenthyl glycol, hexandiol and 1,10-decandiol, and polyvalent alcohols, such as tri-2-hydroxyethyl isocyanurate (THEIC), glycerol, trimethylolethane, trimethylylpropane, pentaerythrite and sugar alcohols, such as mannitol, multivalent carboxylic acids, such as terephthalic acid, isophthalic acid, phthalic acid, sebacic acid, adipic acid, glutaric acid and succinic acid, hydroxycarboxylic acids, such as lactic acid, glycolic acid, caprolactone and malic acid, lactam or aminoacids such as amino caproic acid, epsilon-caprolactam, 12-aminododecanoic acid, laurolactam, 11-aminoundecanoic acid or 10-aminodecanoic acid.

To improve the compatibility with another thermoplastic polymer, the phosphorous containing polymer according to the invention can be end-capped by reaction with a monovalent amine and/or monovalent alcohol and/or a monovalent carboxylic acid as known in the art.

The chemical and physical properties of the polymer according to the invention can be influenced by selecting the other monomers such that these monomers are di- or multivalent monomers. If only divalent monomers are employed, no cross-linking between the polymer backbones occurs. If multivalent monomers are used, cross-linking could occur. By selecting a suitable ratio between di- and multivalent monomers, the degree of cross-linking and thus the properties of the polymer can be tailored.

Furthermore, according to the invention, in one embodiment the phosphorous containing polymer may have an average molecular weight Mn of above 1,000 g/mol, preferably of above 3,000 g/mol, of above 5,000 g/mol or even more preferably of above 6,500 g/mol, most preferably between 5,000 and 8,000 g/mol. The average degree of polymerization of the phosphorous containing polymer preferably amounts to, at least 5, preferably at least 15, even preferably at least 25.Additionally, it is preferred in this embodiment of the invention that the phosphorous containing polymer of the invention has a high phosphorous content of at least 4.0 % by weight, based on the total weight of the phosphorous containing polymer. In further preferred embodiments, the polymer has a phosphorous content of at least 5.0 % by weight, more preferably at least 5.8 % by weight, even more preferably at least 7.0 % by weight, such as at least 7.5 % by weight. The upper limit of the phosphorous content of the polymer of the invention is not particularly limited. Generally, the phosphorous content is preferably 15 % by weight or lower, preferably 10 % by weight or lower, more preferably 9% by weight or lower and even more preferably 8 % by weight or lower. The given lower and upper limits of the phosphorous content can be combined with each other. Suitable ranges are, for example, at least 4.0 % to about 15 % by weight and about 5.0 % to about 9 % by weight. Other combinations of lower and upper limits are possible as well. In preferred embodiments, the phosphorous content is about 5.0 % to about 15 % by weight, more preferably about 5.8 % to about 10 % by weight, even more preferably about 7.0 % to about 9 % by weight, and most preferably about 7.5 % to about 8.5 % by weight, each of the total weight of the monomer.

In another embodiment of the invention, it is preferred that the average molecular weight Mn of the polymer according to the invention is above 8,000 g/mol, preferably above 10,000 g/mol, above 15,000 g/mol or even more preferably above 16,000 g/mol, most preferably between 8,000 and 20,000 g/mol.

The average degree of polymerization of the phosphorous containing polymer preferably amounts to at least 80, preferably to at least 100, even more preferably to at least 130, most preferably between 80 and 165.

Additionally, in this embodiment of the invention it is preferred that the phosphorous containing polymer of the invention has a low phosphorous content preferably between 0.1 and 3.0 % by weight, more preferably between 0.25 and 2.0 % by weight, most preferably between 0.5 and 1.0 % by weight, based on the total weight of the phosphorous containing polymer.

According to the invention, in case the phosphorous containing polymer is a copolymer the viscosity of the polymer of the invention is closed to the one of the corresponding polymer not containing the phosphorous comonomer of the invention . At this viscosity, an optimum processability and property of the polyamide of the invention in the melt-spinning process and other extrusion processes are obtained. The desired viscosity can be further adjusted by an accurate monitoring of the average molecular weight Mn, the average degree of polymerization DPn and/or the degree of branching of the polymer of the invention.

Furthermore, the phosphorous containing polymer of the invention shows good flame-retardant properties.

The chemical and physical properties of the phosphorous containing polymer according to the invention can further be influenced by the temperature and time of polycondensation, solid-state postcondensation, the catalyst used and the addition of, for example, chain prolongation and chain branching monomers. Heat stabilizers may also be added. To improve the color of the flame-retardant polymer according to the invention, it is further possible to use known optical brightening agents.

A further embodiment of the present invention relates to a process of preparing the above described phosphorous containing polymer. This process comprises the steps of
a) reacting 9,10-dihydro-9-oxa-10-phosphaphenanthrene-10-oxide (DOPO) and/or nuclear substituted derivatives thereof with at least one unsaturated divalent carboxylic acid, ester or anhydride thereof, as defined in formula (I) or (II), to obtain a phosphorous-containing monomer of the invention;
b) reacting the phosphorous-containing monomer obtained in step a) with at least one one monomer selected from the group consisting of diamine, diol, aminoacid, lactam, hydroxycarboxylic acid, lactone or mixtures thereof as described above; and
c) optionally carrying out the reaction in step b) in the presence of at least one other monomer, and/or
optionally carrying out the reaction in step b) in the presence of at least one monovalent carboxylic acid and/or monovalent amine and/or monovalent alcohol to obtain an end-capped polymer.

Suitable reaction conditions and in particular polycondensation conditions are known to a person skilled in the art. Useful specific parameters are exemplified in the examples below.

Another embodiment of the invention refers to a thermoplastic polymer composition comprising the phosphorous containing polymer according to the invention mainly or even only or in combination with another thermoplastic polymer to impart flame-retardant properties of that thermoplastic polymer. Therefore, in a further embodiment, the present invention relates to a thermoplastic polymer composition comprising at least one phosphorous containing polymer as described above and optionally a thermoplastic polymer.

The thermoplastic polymer optionally used in the thermoplastic polymer composition of the invention can be selected from a broad variety of polymers, in particular synthetic polymers, including homopolymers, copolymers and block copolymers. Also mixtures of one or more thermoplastic polymers may be used. A list of suitable synthetic polymers is, for example, disclosed in WO 2008/119693 A1, the content of which is incorporated herein by reference. Specific examples of suitable thermoplastic polymers are, for example, polyamides, polyphthalamides, polyesters including unsaturated polyester resins, polysulfones, polyimides, polyolefins, polyacrylates, polyether etherketones, acrylonitril butadiene styrenes (ABS), polyurethanes, polystyrenes, polycarbonates, polyphenylene oxides, phenolic resins and mixtures thereof.

In a preferred embodiment, the thermoplastic polymer is a polyamide, such as a polyamide that is suitable for melt spinning or other molding processes. The polyamide can, for example, be selected from the group consisting of PA 6.6, PA 6, PA 6.10, PA 6.12, PA MXD.6, PA 11 and PA 12. Copolyamides, such as PA 6.6/6 and PA 6.6/6.T and blends of polyamides, such as PA 6.6/PA 6 and PA 6.6/PA 6.10 are suitable as well.

The amount of flame-retardant polymer in the thermoplastic polymer composition according to the invention is not particularly limited and can be selected by a person skilled in the art according to the requirements.

In one embodiment, the thermoplastic polymer composition comprises the phosphorous containing polymer, i.e. the flame-retardant polymer, of the invention in an amount of at least 80 % by weight, preferably of at least 85 % by weight, or of at least 90 % by weight, more preferably of at least 95 % by weight, even more preferably of at least 98 % by weight, most preferably of at least 99 % by weight, based on the total weight of the thermoplastic composition. In this embodiment it is further preferred that the phosphorous containing polymer is a copolymer.

In another embodiment, wherein the flame-retardant polymer of the invention is mixed with at least one further thermoplastic polymer, the thermoplastic polymer composition comprises at least 0.1 % by weight, preferably at least 2 % by weight of the phosphorous containing polymer of the invention based on the total weight of the thermoplastic polymer composition. For example, the thermoplastic polymer composition can comprise from about 0.1 % to about 30 % by weight, preferably from about 2 % to about 25 % by weight, even more preferably from about 5 % to about 20 % by weight of the phosphorous containing polymer, based on the total weight of the thermoplastic polymer composition.

According to the invention, it is preferred that the thermoplastic polymer composition of the invention comprise the phosphorous containing polymer in an amount such that the final thermoplastic polymer composition has a phosphorous content of from about 0.1 % to about 5 % by weight, preferably of from about 0.1 % to about 2 % by weight, in particular of from about 0.5 % to about 1 % by weight, based on the total weight of the thermoplastic polymer composition.

It is also possible to first prepare a master batch of a thermoplastic polymer composition containing a higher phosphorous content of up to, for example, about 5 % by weight of the total weight of the composition and then add this master batch to another thermoplastic polymer composition for tailoring its properties.

Furthermore it preferred that the viscosity of the final thermoplastic polymer composition of the invention is closed to the one of thermoplastic polymer compositions known in the art, which do not contain the phosphorous comonomer of the invention. At this viscosity, an optimum processability and property of the composition of the invention in the melt-spinning process and other extrusion processes are obtained. The desired viscosity can be further adjusted by an accurate monitoring of the average molecular weight Mn, the average degree of polymerization DPn and/or the degree of branching of the polymer of the invention.

Therefore, it is preferred that the final thermoplastic polymer composition of the invention has a viscosity number of 80 to 250 ml/g, more preferred of 100 to 180 ml/g, even more preferred of 110 to 140 ml/g, measured in solution according to ISO307 standard. These viscosity number ranges correspond to the viscosity number ranges of the aliphatic polyamide compositions such as PA66, PA6 and PA610.

The melt viscosity of final thermoplastic polymer composition of the invention is preferably of 50 to 300 Pa·s, more preferably of 70 to 250 Pa·s, even more preferably of 100 to 200 Pa·s, measured by a rheometer with a cone-plate geometry at a temperature ranging from 25 to 30 °C above the melting point of the thermoplastic polymer composition under a stepwise shear sweep ranging from 1 to 160 s⁻¹.

According to the invention, the thermoplastic composition can be used to produce flame-retardant polymer fibers.

In one embodiment, the thermoplastic composition of the invention, which comprises mainly or even only the phosphorous containing polymer of the invention, is directly spun to form filaments. In this embodiment it is preferred that the phosphorous-containing polymer has a phosphorous content from about 0.1 to about 2 % by weight, preferably from 0.1 to 1 % by weight, even more preferred from 0.1 to 0.5 % by weight, based on the total weight of the phosphorous containing polymer.

In another embodiment, the phosphorous containing polymer of the invention is physically mixed with another appropriate thermoplastic polymer, such as for example a polyamide, in the melt, and the mixture is then either directly spun as a polymer mixture having a phosphorous content of between about 0.1 % and about 1 % by weight, so as to form filaments, or, the mixture is then tailored in terms of a master batch having a phosphorous content of between about 2 % and about 5 % by weight, and is then added to the same or a different type of polyamide and spun to filaments in a second process step.

Polymer fibers produced in a melt-spinning process from a thermoplastic polymer composition of the present invention preferably have a total phosphorous content of from about 0.1 % to about 2 % by weight, in particular of from about 0.5 to about 1 % by weight, based on the total weight of the thermoplastic polymer composition, and they are therefore sufficiently flameproof.

All aforementioned polymers can be finished in an excellent manner to be flame-retarding with the aforementioned phosphorous containing polymer by a simple physical mixing of the polymer melts under conditions as are usual in the melt-spinning process. When using the phosphorous containing polymer according to the invention, important polymer properties, such as the melt viscosity, the melting point of the polymer composition obtained after mixing are changed only to an extent that a reliable processing, such as a melt spinning remains entirely ensured.

The thermoplastic polymer composition of the present invention may additionally comprise other flame retardants or additives known to a person skilled in the art, in particular those flame retardants and additives which are used in the preparation of fibers. Suitable other flame-retardants are, for example, melamine cyanurate, melamine polyphosphate, ammonium polyphosphate and metal stannates, preferably zinc stannate, metal borates such as zinc borate, polyhedral oligomeric silsesquioxanes (for example trade name POSS of Hybrid Plastics), and so-called nanoclays based on the exfoliated phyllosilicates montmorillonite and bentonite, such as, e.g., the products Nanomer of Nanocor, or Nanofil of Südchemie, and inorganic metal hydroxides such as the products Magnifin or Martinal of Martinswerk. Due to the use of these additives, parameters that are important to the flame-retarding properties can be modified, for example the characteristic cone calorimetric numbers TTI (time to ignition) can be increased, PHRR (peak of heat release rate) can be reduced and/or a desired suppression of the smoke gas generation can be improved.

Both, the phosphorous containing polymer as well as the thermoplastic polymer composition according to the invention may comprise additional components, such as anti-dripping agents, polymer stabilizers, anti-oxidants, light stabilizers, peroxide scavengers, nucleating agents, fillers and reinforcing agents, and other additives, such as blend compatibilizing agents, plasticizers, lubricants, emulsifiers, pigments, rheology additives, catalysts, flow-control agents, optical brighteners, flame-proving agents, antistatic agents and blowing agents. Specific examples of these additives are disclosed in WO 2008/119693 A1, the content of which is incorporated herein by reference.

The invention will now be further described by the following examples, which are, however, not to be understood in a limiting sense.

### EXAMPLES

### Measurement methods:

Melting, crystallization and glass transition temperatures were determined by DSC, at 10°C/min.

Onset of thermal degradation temperature was determined by TGA, at 10°C/min under nitrogen flow.

Phosphorus content was determined by ICP/OES after sulfonitric mineralization.

Viscosity Number (VN) (unit: mL/g) was determined in solution in formic acid according to ISO307 standard.

Melt viscosity was measured by a rheometer with a cone-plate geometry, at 280°C.

Carboxylic acid End-Groups (CEG) concentration and Amine End-Groups (AEG) concentration were determined by potentiometric titration (unit: meq/kg).

### Starting Materials:

Methyl acrylate, from Sigma Aldrich.

DOPO, 6H-Dibenz(c,e)(1,2)oxaphosphorin 6-oxide, CAS [35948-25-5].

Lunastab DDP, (6-oxide-6H-dibenzo (c,e) (1,2) oxa-phosphorin-6-yl) butanedioic acid, CAS [63562-33-4].

Adipic acid and hexamethylenediamine from Solvay.

### Synthesis of unsaturated divalent carboxylic ester (I)

### Example 1

Methyl acrylate (type III), palladium acetylacetonate (0.3 mmol per mol of methylacrylate), tri-tert-butylphosphonium tetrafluoroborate (31.5 mmol per mol of methylacrylate) and tetrafluoroboric acid (12.6 mmol per mol of methylacrylate) were poured in a stainless steel reactor. The temperature was increased to 110°C and kept 4h. After extraction and purification, dimethyl hex-2-endioate was obtained.

### Syntheses of phosphorous containing monomer (IV)

### Example 2

0.2g (0.012 mol) of the unsaturated methyl ester of Example 1 and 0.3g (0.014 mol) of 9, 10-dihydro-9-oxa-10-phosphaphenanthrene-10-oxide (DOPO) and 10 mol % of triethylamine were poured in a glass tube. The atmosphere was purged with nitrogen, and the temperature was increased to 100°C and kept 50h. After extraction with chloroform and aqueous solution of sodium hydroxide, the organic phase was then purified over silica gel column. The phosphorous containing monomer is isolated with a yield of 80% and a purity of 98%.The phosphorous content was 8.0 wt.-%. It has the following structure:

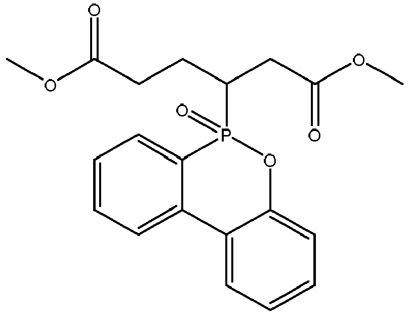

### Example 3

The phosphorylated dicarboxylic acid was then obtained by saponification and/or hydrolysis of the corresponding phosphorylated diester obtained in previous examples 2. 4. 1g (2.57 mmol) of unsaturated methyl ester (I) and 0.27g (11 mmol) of LiOH was dissolved in a water/THF mixture (50/50 wt.- %). The reaction mixture was kept at 30°C for 2h. The reaction mixture is then acidified with HCl. The phosphorous containing monomer has the following structure:

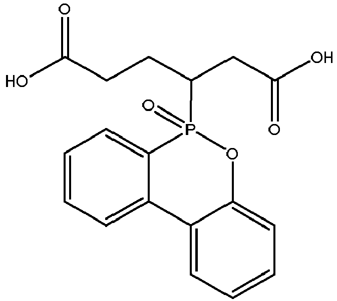

### Synthesis of copolymers

### Example 4

140.7 g (0.53 mol) of hexamethylenediammonium adipate, 8.19 g (0.02 mol) of phosphorous containing monomer from Example 3 and 7.61 g (0.02 mol) of hexamethylenediamine 32.2% aqueous solution were poured with 134.5 g of demineralized water and antifoam in a stainless steel clave equipped with a mechanical stirrer with an internal thermometer. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 269°C and kept for 30 min at the same temperature under continuous stirring. The polymer was extruded in a strand, cooled in a water bath, and then pelletized. A semi-crystalline polymer was obtained with the following analytical data:
The polyamide had a melting point of 254 °C, a crystallization temperature of 207°C, and a thermal degradation onset of 391°C, and a char at 500°C of 8%. The viscosity number was 140 mL/g. The melt viscosity at 280°C under 100s-1 was 160 Pa.s. The phosphorous content was 0.5 %w. The carboxylic end group is 73 meq/kg, and the amino end group is 31 meq/kg ; the estimated molecular weight is 19000g/mol, corresponding to a degree of polymerization (DPn) of about 164.

### Example 5

130.0 g (0.50 mol) of hexamethylenediammonium adipate, 16.31 g (0.04 mol) of phosphorous containing monomer from Example 3 and 15.15 g (0.04 mol) of hexamethylenediamine 32.2% aqueous solution were poured with 129.0 g of demineralized water and antifoam in a stainless steel clave equipped with a mechanical stirrer with an internal thermometer. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 269°C and kept for 10 min at the same temperature under continuous stirring. The polymer was extruded in a strand, cooled in a water bath, and then pelletized. A semi-crystalline polymer was obtained with the following analytical data:
The polyamide had a melting point of 245 °C, a crystallization temperature of 193°C, and a thermal degradation onset of 382°C, and a char at 500°C of 10%. The viscosity number was 129 mL/g. The melt viscosity at 280°C under 100s-1 was 130 Pa.s. The phosphorous content was 0.9 %w. The carboxylic end group is 72 meq/kg, and the amino end group is 30 meq/kg ; the estimated molecular weight is 19500g/mol, corresponding to a degree of polymerization (DPn) of about 161.

### Comparative Example 1 - Production of a PA6.6

150.0 g (0.57 mol) of hexamethylenediammonium adipate salt were poured with 138.0 g of demineralized water and antifoam in a stainless steel clave equipped with a mechanical stirrer with an internal thermometer. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively
released while the temperature was increased to about 272°C and kept for 30 min at the same temperature under continuous stirring. The polymer was extruded in a strand, cooled in a water bath, and then pelletized. A semicrystalline polymer was obtained with the following analytical data: The polyamide had a melting point of 261 °C, a crystallization temperature of 225°C, and a thermal degradation onset of 423°C, and a char at 500°C of 7%. The viscosity number was 131 mL/g. The melt viscosity at 280°C under 100s-1 was 150 Pa.s. The carboxylic end group is 88 meq/kg, and the amino end group is 40 meq/kg ; the estimated molecular weight is 15600g/mol, corresponding to a degree of polymerization (DPn) of about 138.

### Comparative Example 2 - Production of a phosphorous containing PA6.6 copolymer.

Similarly to Comparative Example 1, 132.0 g (0.50 mol) of 5 hexamethylenediammonium adipate salt, 14.6 g (0.04 mol) of Lunastab DDP and 15.3 g (0.04 mol) of hexamethylenediamine 32.2% aqueous solution were poured with 129.0 g of demineralized water and antifoam in a stainless steel clave and polycondensated up to 272°C and kept for 30 min at the same temperature under continuous stirring. The polymer was too fluid to be extruded in a strand and could not be pelletized. A semicrystalline polymer was obtained
with the following analytical data:
The polyamide had a melting point of 257°C, a crystallization temperature of 221 °C, and a thermal degradation onset of 374°C, and a char at 500°C of 10%. The viscosity number was 37 mL/g. The melt viscosity at 280°C under 100s-1 was 1 Pa.s. The phosphorous content was 0.9 %w.

The Examples 4 and 5, according to the invention, enable to prepare phosphorous containing polyamides with appropriate viscosity number and melt viscosity, similar to those of the PA66 (CE1), whereas the phosphorous containing monomer of CE2 prevents to reach high enough viscosity number and melt viscosity.

### Synthesis of homopolymer

### Example 6

2.35 g (0.0061 mol) of phosphorous containing monomer from Example 3 and 1.28 g (0.0066 mol) of hexamethylenediamine 60% aqueous solution were introduced in a glass test tube. The test tube was slightly flushed with nitrogen, and the temperature was increased progressively to 150°C, then steadily up to 275°C and kept for 30 min at this temperature, under atmospheric pressure. After cooling to room temperature, an amorphous polymer was obtained with the following analytical data:
The homopolyamide had a glass transition of 111°C, a thermal degradation onset of 337°C, and a char at 500°C of 28%. The phosphorous content was 6.5 %w. The carboxylic end group is 14 meq/kg, and the amino end group is 273 meq/kg ; the estimated molecular weight is 7000g/mol, corresponding to a degree of polymerization (DPn) of about 30.

### Comparative Example 3

0.756 g (0.0022 mol) of Lunastab DDP and 0.43 g (0.0022 mol) of hexamethylenediamine 60% aqueous solution were introduced in a glass test tube. The test tube was slightly flushed with nitrogen, and the temperature was increased progressively to 150°C, then steadily up to 270°C and kept for 30 min at this temperature, under atmospheric pressure. The mixture is degrading, turning to black. After cooling to room temperature, the mixture is poorly cohesive, falling into powder.

The Example 6, according to the invention, shows that the homopolymerization of the phosphorous containing monomer from Example 3 is possible, whereas the phosphorous containing monomer of CE3 prevents to do so.

### Evaluation of flame retardant properties

The limiting oxygen index (LOI) test was carried out according to the ISO 4589-2 standard on the compression molded bars (100 mm x 6.5 mm x 3 mm) using the top surface ignition method.

The combustibility of the materials was determined by cone calorimeter according to the ISO 5660-1 standard, on the compression molded plates (100 mm x 100 mm x 3 mm), using a heat flux of 35 kW/m². TTI stands for time to ignition, THR for total heat release, pHRR for peak heat release rate, and TSR for total smoke released.

The flame retardant properties are given in Table 1:

| | **CE1** | **Example 5** |
|---|---|---|
| LOI (%) | 22 | 27 |

| Cone calorimeter | | |
|---|---|---|
| TTI (s) | 139 | 89 |
| THR (MJ/m²) | 119 | 79 |
| pHRR (KW/m²) | 748 | 463 |
| TSR (m³) | 8 | 9 |
| Weight loss (%) | 97 | 95 |

| | | |
|---|---|---|
| Table 1: Flame retardant properties. | | |

## Claims

1. Phosphorous containing monomer, which is an adduct of
9,10-dihydro-9-oxa-10-phosphaphenanthrene-10-oxide (DOPO) and/or a nuclear substituted DOPO derivative, with
at least one unsaturated divalent carboxylic acid, ester or anhydride thereof, as defined in formula (I) or (II), 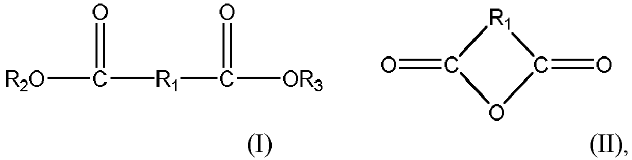 wherein
R₁ is a linear chain containing at least 4 carbon atoms and at least one double bond, and
R₂ and R₃ are independently hydrogen, an alkyl group or an aryl group.

2. Phosphorous containing monomer according to claim 1, wherein R₁ of the formula (I) or (II) is 1-butylene or 2-butylene.

3. Phosphorous containing monomer according to claim 1 or 2, wherein R₂ and R₃ of formula (I) are independently hydrogen, methyl or ethyl.

4. Phosphorous containing monomer according to any one of claims 1 to 3, wherein the monomer has the following formula (IV) 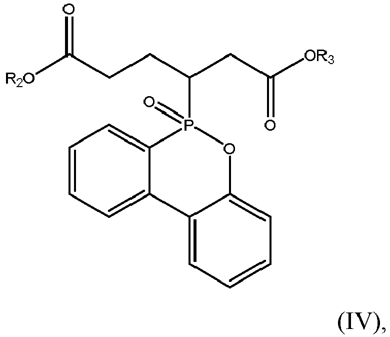 wherein R₂ and R₃ are independently hydrogen, methyl or ethyl.

5. Process for manufacturing of phosphorous containing monomer according to any one of claims 1 to 4, wherein
in a first process step the unsaturated divalent carboxylic acid, ester or anhydride thereof, as defined in formula (I) or (II), is produced by catalytic dimerization of a carboxylic acid, ester or a mixture thereof, as defined in formula (III) or (IIIa) 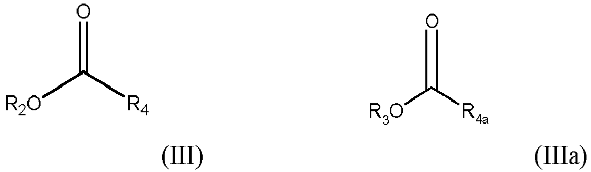 wherein,
R₄ and R₄ₐ are independently a linear chain containing at least 2 carbon atoms and at least one double bond and R₂ and R₃ are independently hydrogen, an alkyl group or an aryl group, and
in a further process step 9,10-dihydro-9-oxa-10-phosphaphenanthrene-10-oxide (DOPO) and/or nuclear substituted DOPO derivative is added to the unsaturated divalent carboxylic acid, ester or anhydride thereof obtained in the first process step.

6. Process for manufacturing of phosphorous containing monomer according to claim 5, wherein R₄ and/or R₄ₐ are ethylene.

7. Process for manufacturing of phosphorous containing monomer according to claim 5 or 6, wherein the catalyst of the catalytic dimerization reaction is selected from the group consisting of alkyl phosphinite, aryl phosphinite, alkyl phosphinate, aryl phosphinate, metallic catalysts, which are selected from the group consisting of Ni, Pd, Ru, Rh, and mixtures thereof.

8. Phosphorous containing polymer, obtainable by polycondensation of
at least one phosphorous containing monomer according to any one of claims 1 to 4, and of
at least one monomer selected from the group consisting of diamine, diol, aminoacid, lactam, hydroxycarboxylic acid, lactone or mixtures thereof, and
optionally of other monomers.

9. Phosphorous containing polymer according to claim 8, wherein the polymer is a homopolymer.

10. Phosphorous containing polymer according to claim 8 or 9, wherein the polymer is a polyamide or a lactam based polyamide.

11. Process for manufacturing phosphorous containing polymer according to any one of claims 8 to 10 comprising the steps of
a) reacting 9,10-dihydro-9-oxa-10-phosphaphenanthrene-10-oxide (DOPO) and/or nuclear substituted DOPO derivative with at least one unsaturated divalent carboxylic acid, ester or anhydride thereof, as defined in formula (I) or (II), to obtain phosphorous-containing monomer according to any one of claims 1 to 4;
b) reacting the phosphorous-containing monomer obtained in step a) with at least one monomer selected from the group consisting of diamine, diol, aminoacid, lactam, hydroxycarboxylic acid, lactone or mixtures thereof; and
c) optionally carrying out the reaction in step b) in the presence of at least one other monomer and/or
optionally carrying out the reaction in step b) in the presence of at least one monovalent carboxylic acid and/or monovalent amine and/or monovalent alcohol to obtain an end-capped polymer.

12. Phosphorous containing polymer composition comprising
at least one phosphorous containing polymer according to any one of claims 8 to 10 and optionally
at least one thermoplastic polymer.

13. Phosphorous containing polymer composition according to claim 12, wherein the thermoplastic polymer is selected from the group consisting of polyamides, polyphthalamides, polyesters including unsaturated polyesters resins, polysulfones, polyimides, polyolefins, polyacrylates, polyether etherketones, acrylnitril butadiene styrenes (ABS), polyurethenes, polystyrenes, polycarbonates, polyethylene oxides phenolic resins and mixtures thereof.

14. Phosphorous containing polymer composition according to any one of claims 12 or 13, wherein the phosphorous containing polymer composition has a phosphor content of 0.1 to 5 %by weight, based on the total weight of the composition.

15. Use of a phosphorous containing polymer according to any one of claims 8 to 10 as flame retardant polymer.
